# EUROPÄISCHE PATENTSCHRIFT

(11) **EP 1 644 649 B1**
(45) Veröffentlichungstag und Bekanntmachung des Hinweises auf die Patenterteilung: **29.02.2012**
(21) Anmeldenummer: 04762358.2
(22) Anmeldetag: 09.07.2004
(51) Int. Cl.: F16C 19/18, B60B 27/00

(54) **RADLAGEREINHEIT IN SCHR ÄGKUGELLAGERAUSFÜHRUNG**
WHEEL BEARING UNIT EMBODIED AS AN ANGULAR CONTACT BALL BEARING
UNITE DE ROULEMENT DE ROUE EN VERSION A ROULEMENT A BILLES A CONTACT OBLIQUE

(30) Priorität: 15.07.2003 DE 10331936
(43) Veröffentlichungstag der Anmeldung: 12.04.2006
(73) Patentinhaber: Schaeffler Technologies GmbH & Co. KG, 91074 Herzogenaurach (DE)
(72) Erfinder: NIEBLING, Peter, 97688 Bad Kissingen (DE); HOFMANN, Heinrich, 97422 Schweinfurt (DE); DLUGAI, Darius, 97422 Schweinfurt (DE); HEIM, Jens, 97424 Schweinfurt (DE); ILGERT, David, Stratford, Ontario NSA IGB (CA)
(86) Internationale Anmeldenummer: PCT/DE2004/001495
(87) Internationale Veröffentlichungsnummer: WO 2005/008086

(56) Entgegenhaltungen:
- EP-A- 1 403 539
- WO-A-85/03749
- WO-A-93/17251
- GB-A- 206 606
- US-A- 804 954
- US-A- 845 778
- US-A- 918 422
- US-A- 1 392 912
- US-A- 5 490 732

## Beschreibung

### Gebiet der Erfindung

Die Erfindung betrifft eine Radlagereinheit in Schrägkugellagerausführung mit wenigstens zwei um eine Mittelachse der Radlagereinheit umlaufenden ersten Reihen von Kugeln und mit zwei parallel zu den ersten Reihen angeordneten zweiten Reihen Kugeln, wobei jeweils eine erste Paarung aus einer ersten Reihe und aus einer zweiten Reihe gegen eine zweite Paarung aus einer ersten Reihe und aus einer zweiten Reihe angestellt sind.

### Hintergrund der Erfindung

Im GB 206,606 ist eine derartige Radlagereinheit dargestellt. Diese Radlagereinheit ist den Anforderungen an moderne Fahrzeuge, insbesondere bei der Montage der Radlagerung an das Fahrzeug nicht mehr angepasst. Der Fachmann wählte bis zu dem Zeitpunkt, an dem die Erfindung gemacht wurde, für Radlagerungen Kegelrollenlager an Fahrzeugen für mittlere und große Belastungen. Der Vorteil des Einsatzes von Kegelrollenlagern liegt in ihrer wesentlich höheren Tragfähigkeit, verglichen zu den üblicherweise angewendeten zweireihigen Schrägkugellagern - wenn Lager beider Gattungen miteinander verglichen werden, die für sich den gleichen Bauraum beanspruchen. Mit dem Einsatz von Kegelrollenlagern werden deshalb auch die bekannten Nachteile dieser in Kauf genommen. Diese Nachteile sind im wesentlichen:
- großes Gewicht und damit unerwünscht hohe, ungefederte Massen am Fahrzeug,
- hoher Reibungswiderstand durch unerwünschten stirnseitigen Kontakt zwischen den Borden des Innenringes und den Kegelrollen,
- der Außenring und der Innenring verlagern sich bei Betrieb des Fahrzeuges auf Grund des Betriebsspieles gegeneinander,
- relativ hohe Herstellkosten.

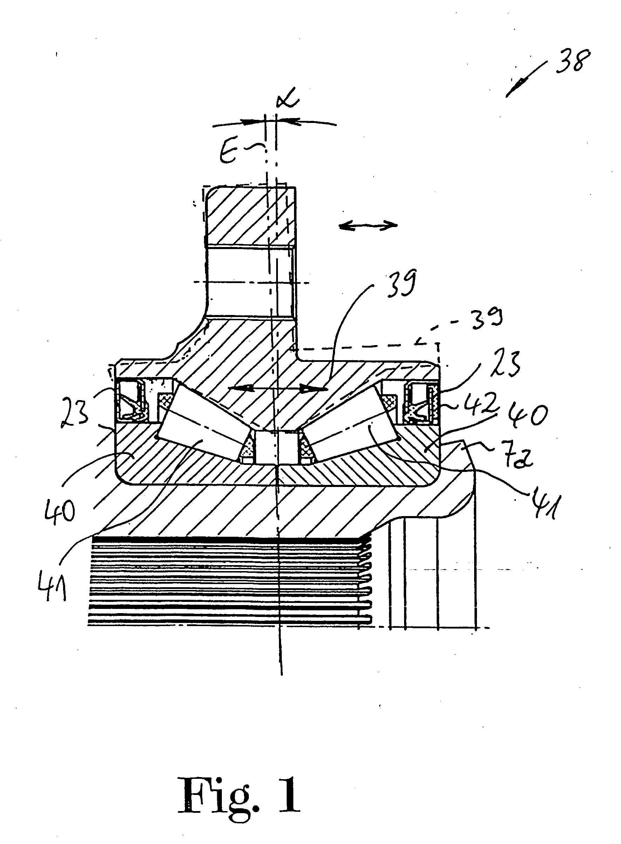

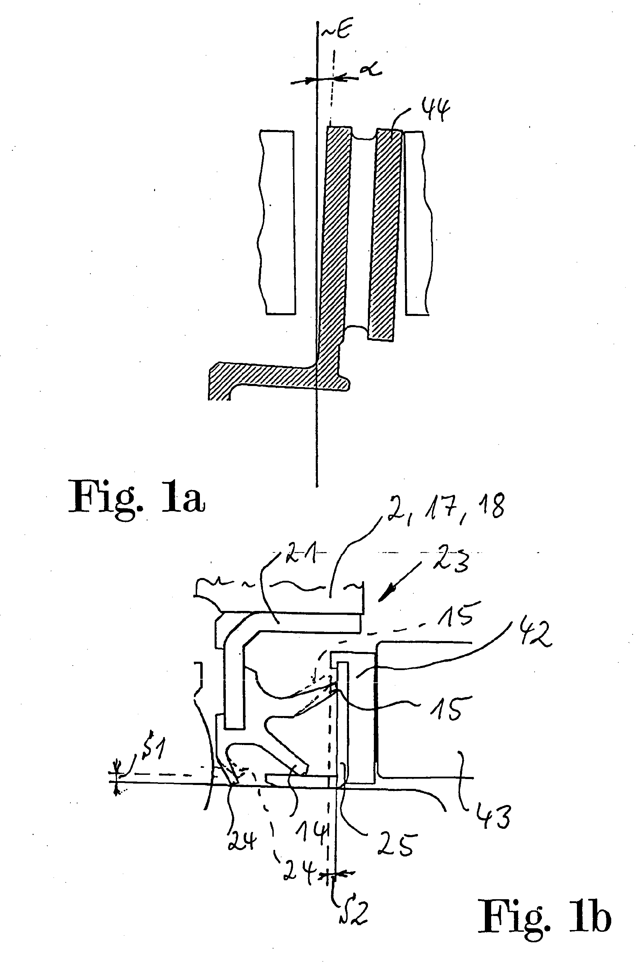

In Figur 1 ist eine Radlagereinheit 38 mit einem Kegelrollenlager aus dem Lieferumfang des Anmelders dargestellt. Die Radlagereinheit 38 ist im wesentlichen aus einem Außenring 39, Innenringen 40, aus zwei gegeneinander gestellten Reihen Kegelrollen 41 und aus Dichtungen 23 gebildet. Die Dichtung 23 ist eine Kassettendichtung und weist an einer am Außenring befestigten Armierung 21 drei Dichtlippen 14, 15, 24 auf (Figur 1b). Eine der Dichtlippen 24 ist umfangsseitig und radial gegen den Innenring 40 vorgespannt. Die nächste der Dichtung 15 liegt radial nach innen gegen einen zylindrischen Abschnitt eines Schleuderbleches an. Von dem Abschnitt ist radial nach außen das eigentliche Schleuderblech abgewinkelt.

An dem Schleuderblech sitzt wahlweise auch ein wechselseitig magnetisierter Encoder oder ein anderer Signalgeber 42, dem wie in Figur 1 b dargestellt, ein Sensor 43 gegenüberliegt. Axial gegen das Schleuderblech liegt eine dritte der Dichtlippen 15 an. An einem der Lagerringe 39, 40 ist eine Bremsscheibe 44 fest. Die Bremsscheibe ist in Figur 1a ohne Zuordnung dargestellt.

Die Radlagereinheit 38 ist mittels des Bördelbordes 7a über die Innenringe 40 spielfrei oder nahezu spielfrei vorgespannt. Aufgrund des Betriebsspieles im Fahrbetrieb kann der Außenring 39 gegenüber dem Innenring 40 um einen Winkel α zu einer senkrecht zur Mittelachse der Radlagereinheit stehenden Ebene E verklppen und/oder sich axial in Richtung des Doppelpfelles zu den Kegelrollen 41 bzw. zum Innenring 40 verschieben. Die mit der gestrichelten Linie dargestellte Kontur des Außenringes 39 zeigt den aufgrund des Spieles ausgewanderten Außenring 39. Spannungsspitzen in den Laufbahnen und an den Kegelrollen 41 und somit die Gefahr einer Überlastung des Lagers sind die Folge.

Die Verlagerungen des Außenringes 39 wirken sich auch nachteilig auf die Anschlusskonstruktion aus. So sind die Dichtungen 23 des Lagers höheren Anforderungen ausgesetzt und weisen bei großen Veriagerungen nicht mehr die erforderlichen Dichtelgenschaften auf. Die Verlagerungen des Außenringes 39 führen u.U. dazu, dass eine oder mehrere der Dichtlippen 14, 15, oder 24 der Dichtung 23 partiell von dem Schleuderblech oder dem Innenring 40 abheben. In Figur 1b sind die möglichen Auswirkungen mit den gestrichelten Linien angedeutet. Die Dichtwirkung Ist dann an den Spalten S1 und S2 aufgehoben. Weiterhin wandert z. B. die an dem Außenring 39 oder Innenring 40 befestigte Bremsscheibe 44 mit dem jeweiligen Ring 39 oder 40 zur übrigen Lager- und Umgebungskonstruktion aus oder verkippt mit diesem, wie in Figur 1a dargestellt ist. Der Encoder nähert sich dem Sensor 43 und die Abstände zwischen Sensor 43 und dem Signalgeber 42 sind ungleichmäßig. Ungenaue Signale der Sensortechnik elektronischer Messsysteme sind die Folge. Die an einem der Lagerringe 39, 40 feste Bremsscheibe 44 veriagert sich mit dem jeweiligen Lagerring 39, 40. Die Lage zu den auf die Bremsscheibe 44 zugreifenden Bremsbacken 45 wird ungenau. Vermindertes Bremsvermögen und vorzeitiger Verschleiß an der Bremsschelbe 44 sowie an den Bremsbacken sind die Folge.

Aus WO 93/17251 A1 ist ein Schrägkugellager bekannt, weiches in beide Axialrichtungen belastbar ist und in axialer Richtung zueinander versetzte Kugelkränze aufweist. Die Kugelkränze werden von einem einteiligen äußeren Laufring umfasst und von zwei Inneren Laufringen getragen.

Die WO 93/17251 A1 zeigt also eine Radlagereinheit in Schrägkugellagerausführung, mit wenigstens zwei ersten Reihen Kugeln, mit zwei parallel zu den ersten Reihen angeordneten zweiten Reihen Kugeln, mit einem gemeinsam alle Kugeln radial außen umgreifenden Außenring, mit zwei Innenringen, wobei auf einer Seite einer zur Mittelachse gedachten senkrechten Radialebene des Schrägkugellagers eine erste und auf einer zweiten Seite der Radialebene eine zweite Paarung angeordnet ist und beide Paarungen aus einer der ersten Reihen und aus einer der zweiten Reihen gebildet und gegeneinander angestellt sind, wobei der Außenring axial beidseitig eines radial nach innen stehenden Mittelbordes jeweils eine erste Innenlaufbahn für eine der ersten Reihen und eine sich der ersten Innenlaufbahn anschließende zweite Innenlaufbahn für eine der zweiten Reihen aufweist.

### Zusammenfassung der Erfindung

Die Aufgabe der Erfindung ist es daher, eine Radlagereinheit mit einem vier reihigen Schrägkugellager zu schaffen, die den Anforderungen an moderne Radlagerungen gewachsen ist und die sich bei unverändertem Bauraum gegen ein Radiagereinheit mit den üblichen Kegelrollenlagern austauschen lässt.

Diese Aufgabe ist mit dem Gegenstand des Anspruches 1 gelöst. Die Radiagereinheit weist einen beide Paarungen der Reihen aus Kugeln gemeinsam außen umgreifenden Außenring auf. Der Außenring ist mit einem radial nach innen stehenden Mittelbord und den Laufbahnen für die Paarungen versehen. In dem Außenring sind die Laufbahnen für jede Reihe der Kugeln eingebracht. Weiterhin weist die Radlagereinheit wahlweise einen Innenring oder zwei Innenringe auf.

Entscheidend ist gemäß einer Ausgestaltung der Erfindung auch, dass die Radlagereinheit eine zumindest die Kugeln, den Außenring und den Innenring in sich selbst zusammenhaltende Baueinheit ist. Diese Baueinheit kann durch den Wälzlagerhersteller komplett vormontiert und zu dem Fahrzeughersteller geliefert werden, ohne dass Einzelteile verloren gehen. Der Fahrzeughersteller kann die Radlagereinheit unmittelbar an der Achskonstruktion des Fahrzeuges befestigen und das entsprechende Fahrzeugrad anbringen.

Die einzelnen Reihen Kugeln der Radiagerungen weisen in Richtung der Lagerachse (Mittelachse) gegeneinander versetzt angeordnete Innen- und Außenlaufbahnen auf. Jeweils eine Paarung aus einer ersten und aus einer zweiten Reihe nimmt nur Axialkräfte in eine Richtung auf. Bei Radialbelastungen des Radlagers entsteht im Radlager eine in axiale Richtung wirkende Kraft, die durch eine Gegenkraft ausgeglichen werden muss. Deshalb ist jeweils eine Paarung gegen eine weitere Paarung angestellt und axial gesichert. Der oder die Innenringe sind dazu stirnseitig außen mit einem Bord versehen, an dem vorteilhaft zumindest teilweise die Laufbahnen der zweiten Reihe ausgebildet sind und der ein gegeneinander Anstellen, d.h. Verspannen, der Paarungen ermöglicht.

Die Paarungen der erfindungsgemäßen Radiagereinheit sind axial über die konzentrisch auf einem zylindrischen Abschnitt eines Flanschkörpers sitzenden Innenringe bzw. über eine Innenlaufbahn an dem Flanschkörper und über einen Innenring axial zueinander verspannt. Der Flanschkörper ist in der Regel um die Mittelachse der Radlagerung rotationssymmetrisch ausgebildet.

Der Innenring weist zwei Laufbahnen für zwei der parallelen Kugelreihen auf, wobei es sich um jeweils eine erste sowie um eine zweite Reihe Kugeln in einer Paarung handelt. Die zweiten Reihen Kugeln liegen im Lager axial außen und nehmen die zueinander benachbarten ersten Reihe Kugeln zwischen sich. Bei der Verwendung nur eines Innenringes auf dem Flanschkörper liegt der Innenring axial an einem Stützbord an dem Flanschkörper an, wobei sich axial an den Innenring zwei direkt in den Flanschkörper eingebrachte Laufbahnen für die weitere der Paarungen anschließen. Bei der Montage der Radlagereinheit werden die Paarungen mittels eines radial nach außen weisenden sowie dem Stützbord axial gegenüberliegenden Bördelbordes axial verspannt und gehalten. Dazu wird ein axialer und hohlzylindrischer Endabschnitt an dem Flanschkörper plastisch radial so nach außen geformt, dass dieser an der axial außen liegenden Stirnseite eines der Innenringe anliegt.

Gemäß einer weiteren Ausgestaltung der Erfindung ist die Radiagereinheit mit wenigstens einem Befestigungselement zum fahrzeugseitigen Befestigen der Radiagerung und/oder wenigstens einem weiteren Befestigungselement zum Befestigen eines Rades an der Radlagerung versehen ist. Diese Befestigungselemente sind zum Beispiel Flansche an dem Innen- und/oder Außenring oder mehrere am Umfang der Ringe verteilte sowie radial hervorstehende Ansätze. Mit einer weiteren Ausgestaltung der Erfindung weist der Flanschkörper eines der Befestigungselemente auf. Dabei ist das Befestigungselement z. B. ein von dem Flanschkörper radial abgehender Flansch o.ä. zum Befestigen eines Rades, einer Bremsscheibe oder zur fahrzeugsseitigen Befestigung der Radlagereinheit. Weiter ist vorgesehen, dass der Außenring wenigstens eines der Befestigungselemente aufweist. Das Befestigungselement ist einteilig mit dem Außenring ausgebildet und ist mindestens ein radialer Ansatz. Vorzugsweise ist der radiale Ansatz zu einem umlaufenden Flansch ausgebildet. Es ist auch denkbar, an dem Außenring zwei der Flansche auszubilden. Der/die Flansch(e) ist/sind wahlweise zur Befestigung einer Bremsscheibe bzw. eines Fahrzeugrades und bei einem Flansch wahlweise auch zur Befestigung der Radiagereinheit über den Außenring am Fahrzeug vorgesehen.

Weitere Ausgestaltungen der Erfindung sind im Kapitel "Detaillierte Beschreibung der Zeichnungen" näher beschrieben.

Die Vorteile eines vierreihigen Schrägkugellagers gegenüber herkömmlichen zweireihigen Schrägkugellagern sind:
- Reduzierung des Gewichtes durch kompakte Bauweise,
- hohe Tragzahlen
- gleichmäßige Krafteinleitung im Außenring/Innenring und Radflansch durch vier Reihen Kugeln mit vielen kleinen Wälzkörpern pro Reihe. Durch die gleichmäßige Krafteinleitung wird die Bauteilbelastung verringert und Ringquerschnitte können reduziert werden. Die Belastung des Bördelbordes wird durch die gleichmäßigere Druckverteilung auf die Fugen zwischen dem Sitz des Innenringes und des Flanschkörpers verringert.
- Bei der Verwendung von oberflächengehärteten Lagerringen bzw. Laufbahnen bedeutet der Einsatz von Kugeln mit kleineren Durchmessern geringere Einhärtetiefen und damit auch geringere Durchlaufzeiten im Härteprozess. Weiterhin sind die Querschnitte der Ringe reduzierbar. Es ist ein bedeutendes Potential für Kosteneinsparungen bei Material und in der Fertigung geschaffen.
- Die Lagerverkippung ist bis um zu 50 % reduziert. Die Funktionssicherheit und der Komfort der Bremsen sind somit verbessert.
- Aufgrund geringerer axialer Auswanderung ist das Rad besser geführt. Die geringere Lagerverkippung führt außerdem zu einer Verbesserung der Dichtfunktion und Reduzierung der Dichtungsreibung, da die Dichtlippenüberdeckung verringert werden kann.

Durch den Einsatz von Kugeln, die von Reihe zu Reihe unterschiedliche Durchmesser aufweisen bzw. Die mit unterschiedlichen Druckwinkein angestellt sind oder die unterschiedliche Schmiegungen aufweisen, ist es möglich, die Belastungsaufnahme optimal anzupassen.

Geringe Lagerverkippung und Auswanderung des Außenringes sind wesentliche Voraussetzungen für ein exaktes Funktionieren elektronischer Messsysteme am Fahrzeugrad, die z. B. Bestandteile von ABS-Systemen sind.

Die Vorteile gegenüber Kegelrollenlagereinheiten sind:
- Die Lagerverkippung wird mit allen vorher beschriebenen Vorteilen um bis zu 40 % verringert.
- Die Verlustleistung infolge hoher Bordreibung der Kegelrollen an den Borden der Lagerringe entfällt. Dies wirkt sich vorteilhaft auf den Kraftstoffverbrauch des Fahrzeuges aus und reduziert auch die Wärmeentwicklung in der Radlagereinheit.
- Geringere Axialverschiebung unter Belastung mit all den vorher beschriebenen Vorteilen.

Die vierreihige Schrägkugellagerausführung gemäß Erfindung ist bei gleichem Bauraum gegen eine Kegelrollenlagereinheit austauschbar.

### Kurze Beschreibung der Zeichnungen

Weitere Einzelheiten und Ausgestaltungen der Erfindung sind nachfolgend anhand von in den Figuren 2 bis 8 beschriebenen Ausführungsbeispielen näher erläutert. Es zeigen im einzelnen:
- Figur 1: die geschnittene Teilansicht eines bekannten Kegelrollenlagers mit den in den Figuren 1a und 1 b vergrößerten Details.
- Figur 2: eine Alternative, bei dem der einteilige Außenring einen Flansch zur Befestigung am Fahrzeug aufweist und bei dem im Radlager generell Kugeln gleichen Durchmessers eingesetzt sind,
- Figur 3: eine geschnittene Teilansicht einer erfindungsgemäßen Radlagereinheit, die über den Außenring in einer Bohrung zum Fahrzeug befestigt ist,
- Figur 4: eine geschnittene Teilansicht einer erfindungsgemäßen Radlagereinheit, bei der die Reihen Kugeln in einer TOT - Anordnung angestellt sind,
- Figur 5: eine Modifikation der Radlagereinheit nach Figur 4 mit abweichenden Druckwinkeln,
- Figur 6: eine teilweise geschnittene Gesamtansicht einer erfindungsgemäßen Radlagereinheit sowie
- Figur 7 und Figur 8: Detailansichten der vorher beschriebenen Radlagereinheiten, in denen die geometrische Ausbildung der Innenringe bzw. des Außenringes näher dargestellt ist.

### Detaillierte Beschreibung der Zeichnungen

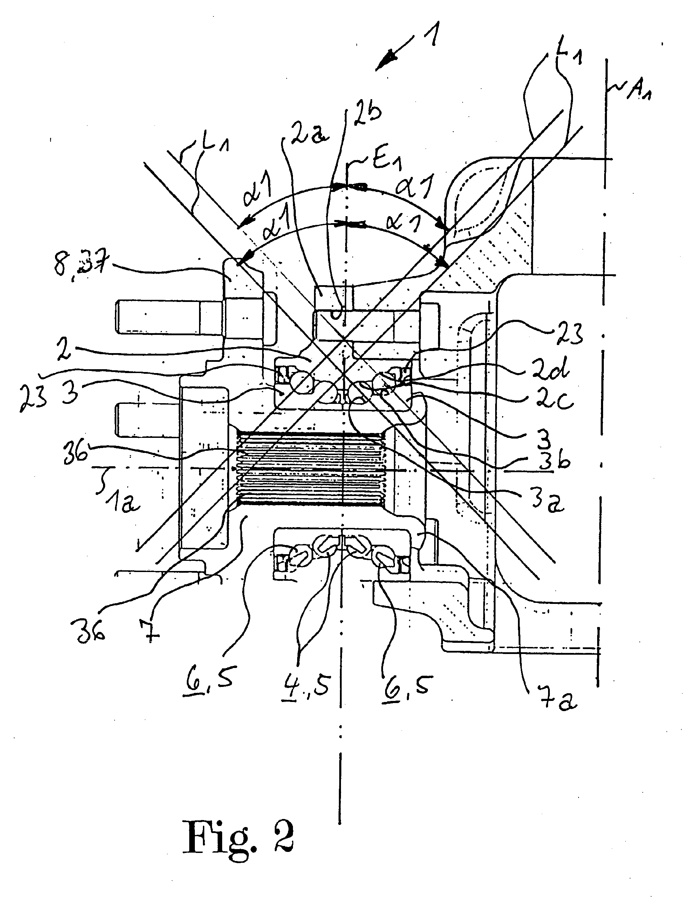

Figur 1 wurde zuvor im Kapitel "Hintergrund der Erfindung" näher erläutert. Die Erfindung ist für Radlagerungen an gelenkten und ungelenkten Fahrzeugrädern geeignet. Figur 2 zeigt eine Radlagereinheit 1, die zu einer um die Achse A, schwenkblaren Radlagerkonstruktion angeordnet und über eine Kerbverzahnung 36 oder ein ähnliches Formschlusselement angetrieben ist. Die Radlagereinheit 1 weist einen Außenring 2, zwei Innenringe 3, zwei erste Reihen 4 von Kugeln 5 sowie zwei zweite Reihen 6 von Kugeln 5 auf. Beidseitig der Radialebene E₁ des Lagers ist jeweils eine Paarung aus einer ersten Reihe 4 und aus einer zweiten Reihe 6 angeordnet. Die Radiagereinheit 1 weist weiter einen Flanschkörper 7 auf, der mit einem Befestigungselement 8 in Form eines Flansches 37 versehen ist. In dem Flansch 37 sitzen Radbolzen 9 fest.

Die Innenringe 3 sitzen fest auf dem Flanschkörper 7. Ein radial aus dem Flanschkörper 7 nach außen geformter sowie gegen einen der Innenringe 3 gepresster Bördelbord 7a verspannt die Innenringe 3 gegeneinander und stellt die Paarungen somit gegeneinander an. Dabei stützen sich die Kugeln 5 in Richtung der Kontaktlinien L₁ an den Innenlaufbahnen 3a und 3b des Innenringes 3 und den Außenlaufbahnen 2c und 2d des Außenringes 2 ab.

Der einteilige Außenring 2 geht in einen radialen Flansch 2a mit Flanschlöchern 2b über, mit dem die Radlagereinheit 1 zu Umgebung der Radlagereiheit, in diesem Fall der Achskonstruktion, fest ist. In die Flanschlöcher 2b greifen dazu Bolzen ein.

Die Kugeln 5 der Reihen 4 und 6 weisen zueinander alle den gleichen Durchmesser auf. Die erste Reihe 4 und die zweite Reihe 6 in einer Paarung sind in Tandem-Anordnung zueinander angeordnet. Die Paarungen sind in einer sogenannten O-Anordnung gegeneinander angestellt. Dabei sind die Kugeln 5 entlang der schräg zur Mittelachse 1 a verlaufenden Kontaktlinien L₁ vorgespannt. Zwischen der Radialebene E₁ der Radlagereinheit 1 und den Kontaktlinien L, ist jeweils der gleiche Druckwinkel α1 ausgebildet.

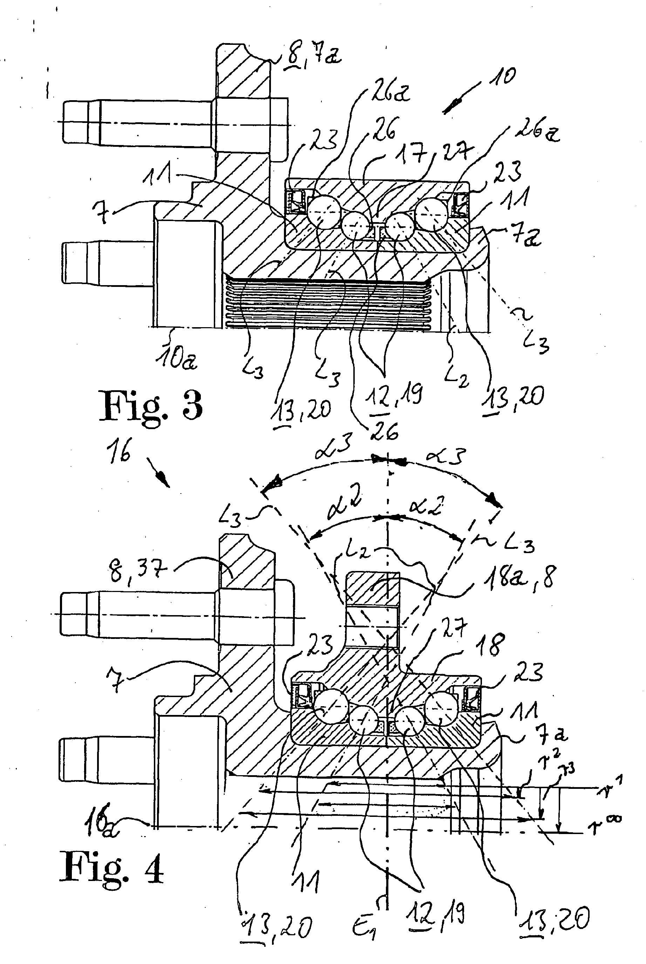

Die Figuren 3 und 4 zeigen erfindungsgemäße Radiagereinheiten 10 und 16, die sich auch durch die Ausführung ihrer Außenringe 17 und 18 voneinander unterscheiden. Der Außenring 17 der Radlagereinheit 10 weist einen zylindrischen Außenmantel auf, mit dem die Radlagereinheit 10 fahrzeugseitig in einer nicht dargestellten Bohrung festsitzt. Der Außenring 18 der Radlagereinheit 16 ist mit einem radialen Flansch 18a zur.Befestigung am Fahrzeug versehen. Beide Radlagereinheiten 10, 16 weisen jeweils zwei zueinander symmetrisch ausgebildete Innenringe 11 auf, die mit der bordlosen Seite aneinander liegen die mittels des Bördelbordes 7a des Flanschkörpers 7 gegeneinander vorgespannt sind. Jeweils eine erste Reihe 12 mit Kugeln 19 ist in Tandem-Anordnung mit einer zweiten Reihe 13 Kugeln 20 angeordnet. Die Kugeln 19 der ersten Reihe 12 weisen bei zueinander gleichem Durchmesser einen kleineren Durchmesser auf als die Kugeln 20 der zweiten Reihe 13. Die zwischen der Radialebene E₁ und den Kontaktlinien L₂ bzw. L₃ eingeschlossenen Druckwinkel α2 bzw. α3 unterscheiden sich von Reihe zu Reihe, wobei die Paarungen zueinander in einer O-Anordnung angestellt sind. Die Druckwinkel α3 sind größer als die Druckwinkel α2. Die Kontaktlinien L₂, L₃ einer jeden Paarung laufen so schräg in Richtung der Mittelachse 10a bzw. 16a, dass sich die Kontaktlinien H₂, L₃ der ersten Paarung mit abnehmendem radialem Abstand r' bis r" zur Mittelachse zunehmend axial von den Kontaktlinien L₂, L₃ der zweiten Paarung und auch innerhalb einer Paarung voneinander weg entfernen - so dass schließlich die axial außen liegenden Kontaktlinien L₃ die Mittelachse 10a, 16a axial außerhalb des Radlagers schneiden.

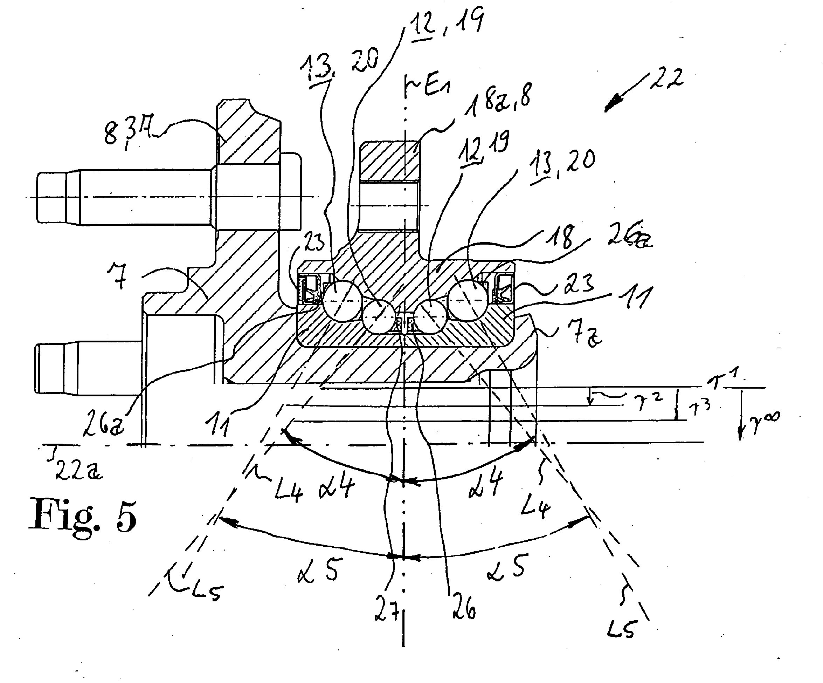

Figur 5 zeigt eine erfindungsgemäße Radiagereinheit 22 mit im wesentlichen gleichem Aufbau zu der Radlagereinheit 16 nach Figur 4. In der Radlagereinheit 22 ist jedoch ein Druckwinkel α4 zwischen den Kontaktlinien L₄ der Kugeln 19 und der Radialebene E, größer als der Druckwinkel α5 zwiscben den Kontaktlinien L₅ der Kugeln 20 in den zweiten Reihen 13. Die Kontaktlinien L₄, L₅ einer jeden Paarung laufen so schräg in Richtung der Mittelachse 22a, dass sich die Kontaktlinien L₄, L₅ der ersten Paarung mit abnehmendem radialem Abstand r¹ bis r⁻ zur Mittelachse zunehmend axial von den Kontaktlinien L₂, L₃ der zweiten Paarung voneinander weg entfernen und sich innerhalb einer Paarung einander axial annähern - so dass schließlich die axial außen liegenden Kontaktlinien L₅ die Mittelachse 22a axial außerhalb der Radiagereinheit 22 schneiden und jeweils eine Kontaktlinie L₄ kreuzen.

Alle in den Figuren 1 bis 6 dargestellten Radiagereinheiten 1, 10, 16 und 22 sind an der Radlagerung beidseitig mittels der Dichtungen 23 abgedichtet. Die Dichtungen 23 sind in Figur 1 b vergrößert dargestellt und im wesentlichen zweiteilig ausgebildet. Die Armierung 21 in Form eines winkelförmiger Blechringes ist in die Innenbohrung des Außenringes 2, 17, 18 eingepresst und mit wenigstens zwei, aber vorzugsweise drei elastischen der Dichtlippen 14, 15, 24 versehen. Zwei der Dichtlippen 14, 15 liegen an einem u. U auch als das Schleuderblech vorgesehenen Winkelring 25 der Dichtung 23 dichtend an. Die Dichtlippe 24 liegt am Innenring 3, 11 an.

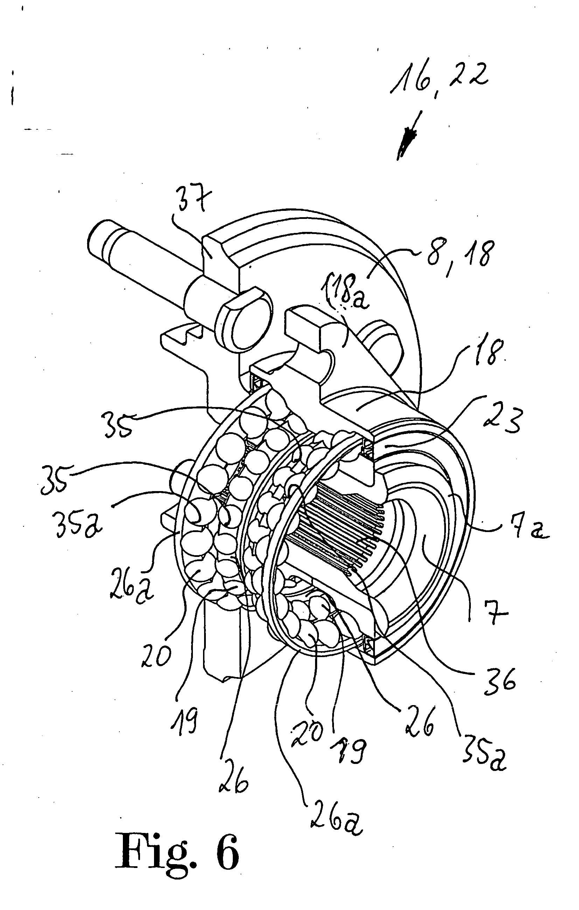

Figur 6 zeigt eine Gesamtansicht der Radiagereinheit 16 bzw. 22, teilweise geschnitten. Die Kugeln 19 bzw. 20 der ersten Reihe 12 bzw. zweiten Reihe 13 sind jeweils in einem Kugelkäfig 26, 26a gehalten und geführt. Die Kugeln 19 bzw. 20 sind vorzugsweise in die Taschen 35 bzw. 35a des Kugelkäfigs 26, 26a eingeschnappt. Dabei sind die Taschen 35 bzw. 35a axial in eine Richtung geöffnet, wobei die Öffnungen der Taschen 35a zueinander hin und die Öffnungen der Taschen 35 der Kugelkäfige 26 voneinander weg weisen.

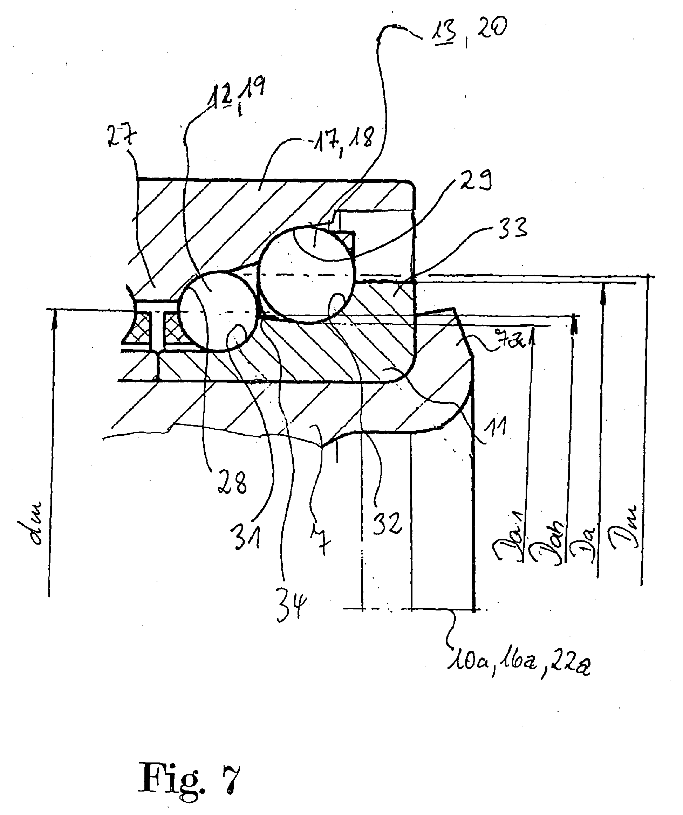

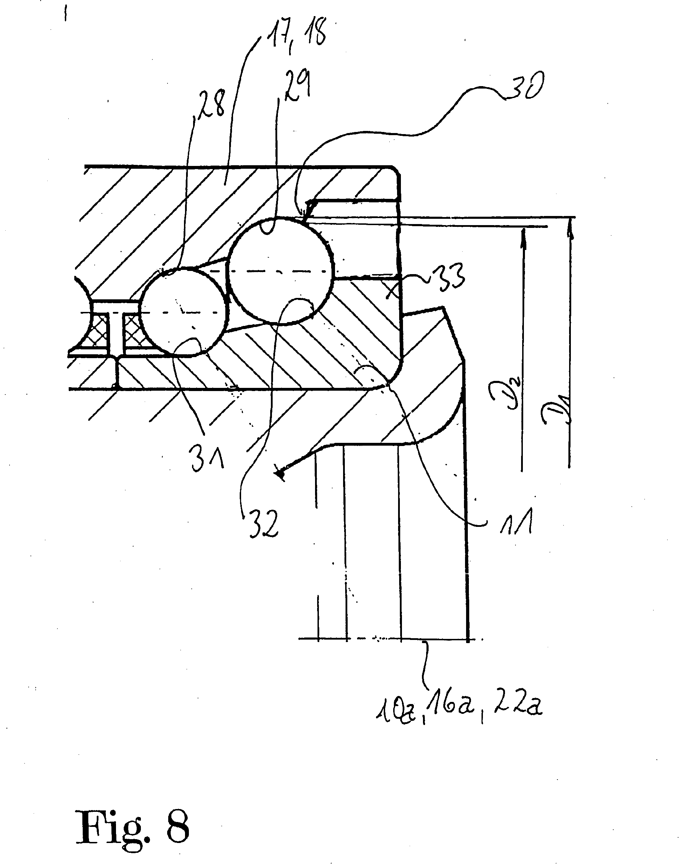

Die Figuren 7 und 8 zeigen vergrößert die geometrische Gestalt der Ringe 11, 17, 18 ohne Darstellung der Dichtung 23, mit denen die vorhergehend beschriebenen Ausgestaltungen der Radlagereinheiten 10, 16, 22 wahlweise ausgestaltet sind.

Ein Durchmesser dₘ des gedachten durch die Zentren der Kugeln 5, 19 der ersten Reihen 12 gelegten sowie um die Mittelachse 10a bzw. 16a, 22a umlaufenden Mittenkreises ist kleiner als der Durchmesser Dₘ eines gedachten durch die Zentren der Kugeln 20 der zweiten Reihen 13 gelegten und um die Mittelachsen umlaufenden Mittenkreises. Der Außenring 17, 18 weist einen radial nach innen stehenden Mittelbord 27 auf. Axial beidseitig des Mittelbordes 27 ist jeweils eine erste Innenlaufbahn 28 für eine der ersten Reihen 12 und eine sich dem Mittelbord 27 unmittelbar axial anschließende zweite Innenlaufbahn 29 für eine der zweiten Reihen 13 ausgebildet.

Die Innenringe 11 weisen jeweils eine erste Außenlaufbahn 31 für eine der ersten Reihen 12 auf. Dazu benachbart sind zweite Außenlaufbahnen 32 für jeweils eine der zweiten Reihen 13. Jeder der Innenringe weist eine der Außenlaufbahnen 31 bzw. 32 auf. Axial außen der Radiagerung-schließt sich an die ersten Außenlaufbahnen 31 jeweils ein Außenbord 33 an. Der maximale Borddurchmesser Dₐ des Außenbordes 33 ist mindestens genau so groß oder größer wie alle weiteren zur Mittelachse 10a, 16a, 22a senkrechten sowie größten Außendurchmesser an dem Innenring, die sich dem Außenbord zur ersten Außenlaufbahn hin anschließen.

An der in Figur 7 dargestellten Ausgestaltung des Innenringes 11 ist radiale Laufbahnüberhöhung 34 axial zwischen der ersten Laufbahn 31 und zweiten Außenlaufbahn 32 ausgebildet. Die erste Außenlaufbahn 31 geht in Richtung der zweiten Außenlaufbahn 32 in die Laufbahnüberhöhung 34 über. Der kleinste zur Mittelachse senkrechte Außendurchmesser Dₐ₁ der ersten Laufbahn 31 ist kleiner als der maximale Außendurchmesser der Laufbahnüberhöhung Dₐₕ.

In Figur 8 ist der Außenring 17, 18 im Vergleich zur Darstellung nach Figur 7 leicht modifiziert. Der zweiten Innenlaufbahn 29 schließt sich an einer von der ersten Innenlaufbahn 28 axial abgewandten Seite eine Durchmessereinengung 30 an. Dabei geht die erste Innenlaufbahn 28 in die Durchmessereinengung 30 über. Der größte zur Mittelachse 16a, 22a senkrechte Innendurchmesser D₁ der zweiten Innenlaufbahn 29 ist größer als der kleinste zur Mittelachse 10a, 16a, 22a senkrechte Innendurchmesser D₂ an der Durchmessereinengung 30. Der kleinste zur Mittelachse senkrechte Außendurchmesser der zweiten Außenlaufbahn 32 zumindest gleich groß oder größer als alle weiteren Außendurchmesser des Innenringes 11, die sich der zweiten Außenlaufbahn 32 an einer von dem Außenbord 33 axial abgewandten Seite anschließen.

Mit einer derartigen Gestaltung der Innen- bzw. Außenringe entfallen die üblicherweise die Befüllung der Radlager hindernden Schultern und Borde. Es ist erreicht, dass jeweils einer der Lagerringe mit Kugeln beider Reihen oder beide Laufringe mit Kugeln je einer Reihe bestückt werden können und danach ein Verschieben der Ringe ineinander ungehindert möglich ist.

### Bezugszeichen

- 1: Radlagereinheit
- 1a: Mittelachse
- 2: Außenring
- 2a: Flansch
- 2b: Flanschlöcher
- 2c: Innenlaufbahn
- 2d: Innenlaufbahn
- 3: Innenring
- 3a: Außenlaufbahn
- 3b: Außenlaufbahn
- 4: Außenlaufbahn
- 5: Kugel
- 6: zweite Reihe
- 7: Flanschkörper
- 7a: Bördelbord
- 8: Befestigungselement
- 9: Radbolzen
- 10: Radlagereinheit
- 10a: Mittelachse
- 11: Innenring
- 12: erste Reihe
- 13: zweite Reihe
- 14: Dichtlippe
- 15: Dichtlippe
- 16: Radlagereinheit
- 16a: Mittelachse
- 17: Außenring
- 18: Außenring
- 18a: Flansch
- 19: Kugel
- 20: Kugel
- 21: Armierung
- 22: Radlagereinheit
- 22a: Mittelachse
- 23: Dichtung
- 24: Dichtlippe
- 25: Winkelring
- 26: Kugelkäfig
- 26a: Kugelkäfig
- 27: Mittelbord
- 28: Innenlaufbahn
- 29: Innenlaufbahn
- 30: Durchmessereinengung
- 31: erste Außehlaufbahn
- 32: zweite Außenlaufbahn
- 33: Außenbord
- 34: Laufbahnüberhöhung
- 35: Tasche
- 35a: Tasche
- 36: Kerbverzahnung
- 37: Flansch
- 38: Radiagereinheit
- 39: Außenring
- 40: Innenring
- 41: Kegelrollen
- 42: Signalgeber
- 43: Sensor
- 44: Bremsscheibe

## Patentansprüche

1. Radlagereinheit (1, 10, 16, 22) in Schrägkugellagerausführung,
- mit wenigstens zwei ersten Reihen (4, 12) Kugeln (5, 19)
- mit zwei parallel zu den ersten Reihen (4, 12) angeordneten zweiten Reihen (6, 13) Kugeln (5, 20),
- mit einem gemeinsam alle Kugeln (5, 19, 20) radial außen umgreifenden Außenring (2, 17, 18),
- mit einem Innenring oder zwei Innenring (3,11),
wobei auf einer Seite einer zur Mittelachse (10a, 16a, 22a) gedachten senkrechten Radialebene (E) des Schrägkugellagers eine erste und auf einer zweiten Seite der Radialebene (E) eine zweite Paarung angeordnet ist und beide Paarungen aus einer der ersten Reihen (4, 12) und aus einer der zweiten Reihen (6, 13) gebildet und gegeneinander angestellt sind, indem ein nach außen geformter, sowie gegen den einem Innenring oder gegen einen der Innenringe (3, 11) gepresster Bördelbord (7a) diesen Innenring (3, 11) verspannt und dabei der Außenring (2, 17,18) axial beidseitig eines radial nach innen stehenden Mittelbordes (27) jeweils eine erste Innenlaufbahn (28) für eine der ersten Reihen und eine sich der ersten Innenlaufbahn anschließende zweite Innenlaufbahn (29) für eine der zweiten Reihen (6, 13) aufweist, wobei die Radlagereinheit (1,10, 16, 22) zwischen der Kontaktlinie der Schrägkugellagerausführung und der Radialebene (E) eingeschlossene Druckwinkel aufweist, wobei die Druckwinkel sich in ihrer absoluten Größe in Winkelgrad zwischen den Reihen (12, 13) in einer Paarung voneinander unterscheiden.

2. Radlagereinheit nach Anspruch 1, bei der ein größter Durchmesser eines gedachten durch die Zentren der Kugeln (5, 19) der ersten Reihen (4, 12) gelegter sowie um die Mittelachse (1a, 10a, 16a, 22a) umlaufenden ersten Mittenkreises kleiner ist als ein größter Durchmesser eines gedachten durch die Zentren der Kugeln (5, 20) der zweiten Reihen (6, 13) gelegten sowie um die Mittelachse (1a, 10a, 16a, 22a) umlaufenden zweiten Mittelkreises.

3. Radlagereinheit nach Anspruch 1, bei der die Kugel (19) der ersten Reihe (12) einen kleineren Kugeldurchmesser aufweisen als die Kugeln (20) der zweiten Reihe (13).

4. Radlagereinheit nach Anspruch 1, bei der sich der zweiten Innenlaufbahn (29) axial von der ersten Innenlaufbahn (28) abgewandt eine Durchmessereinengung (30) anschließt, wobei die zweite Innenlaufbahn (29) in die Durchmessereinengung (30) übergeht und dabei der größte freie Innendurchmesser der zweiten Innenlaufbahn (29) größer ist als der kleinste freie Innendurchmesser an der Durchmessereinengung (30).

5. Radlagereinheit nach Anspruch 1, wobei der Innenring (3, 11) wenigstens eine erste Außenlaufbahn (31) und eine zweite Außenlaufbahn (32) für eine der Paarungen aufweist.

6. Radlagereinheit nach Anspruch 5, mit wenigstens zwei der Innenringe (3, 11).

7. Radlagereinheit nach Anspruch 5, mit einem radial nach außen stehenden Außenbord (33) am Innenring (3, 11), wobei der Außenbord (33) sich der zweiten Außenlaufbahn (32) von der ersten Außenlaufbahn (31) weg anschließt und dabei der Außenbord (33) einen maximalen äußeren Borddurchmesser aufweist, der größer ist als alle weiteren sich dem Außenbord (33) zur ersten Außenlaufbahn (31) hin anschließenden größten Außendurchmesser des Innenringes (3, 11).

8. Radlagereinheit nach Anspruch 7, mit einer radialen Laufbahnüberhöhung (34) axial zwischen der ersten Außenlaufbahn (31) und der zweiten Außenlaufbahn (32), wobei die zweite Außenlaufbahn (32) in Richtung der ersten Außenlaufbahn (31) in die Laufbahnüberhöhung (34) übergeht und wobei der kleinste Außendurchmesser der zweiten Außenlaufbahn (32) kleiner ist als der kleinste Außendurchmesser der Laufbahnüberhöhung (34).

9. Radlagereinheit nach Anspruch 7, bei der zumindest die Kugeln (5, 19, 20), der Außenring (2, 17, 18) und der Innenring (3, 11) zu einer in sich selbst zusammenhaltende Baueinheit gehalten sind, wobei auf einem Flanschkörper (7) wenigstens einer der Innenringe (3, 11) konzentrisch angeordnet ist und dabei der Innanring (3, 11) axial an dem Flanschkörper (7) anliegt sowie mittels eines radial nach außen weisenden sowie axial stirnseitig gegen den Innenring (3, 11) gedrückten Bördelbordes (7a) axial gehalten ist.

10. Radlagereinheit nach Anspruch 9, bei der auf dem Flanschkörper (7) zwei stirnseitig einander berührende Innenringe (3, 11) angeordnet und mittels des Bördelbordes (7a) axial gegeneinander vorgespannt sind und dabei einer der Innenringe (3, 11) axial gegen den Flanschkörper (7) gedrückt ist.

11. Radlagereinheit nach Anspruch 1, wobei die Radiagereinheit (1,10, 16, 22) zwischen der Kontaktlinie der Schrägkugellagerausführung und einer zur Mittelachse (10a, 16a, 22a) gedachten senkrechten Ebene eingeschlossene Druckwinkel aufweist, wobei die Druckwinkel von Reihe (4) zu Reihe (6) zueinander in jeweils einer der Paarungen in ihrer absoluten Größe in Winkeigrad gleich groß sind.

12. Radlagereinheit nach Anspruch 1, mit Kontaktlinien, deren axialer Abstand von Paarung zu Paarung zur Mittelachse (10a, 16a, 22a) hin zunimmt.

13. Radlagereinheit nach Anspruch 1, die wenigstens ein Befestigungselement (8) zur Umgebung der Radiagereinheit (1, 10, 16, 22) aufweist.

14. Radiagereinheit nach Anspruch 13, bei der das Befestigungselement (8) ein radial abgehender Flansch (2a, 37) ist.

15. Radlagereinheit nach Anspruch 13, bei der eines der Befestigungselemente (8) wenigstens ein einteilig mit dem Außenring (2, 18) ausgebildeter Ansatz ist und der Ansatz dabei radial nach außen aus dem Außenring (2, 18) hervorsteht.

16. Radlagereinheit nach Anspruch 15, bei der das Befestigungselement (8) ein um die Mittelachse (1 a, 16a, 22a) umlaufender, mit mehreren umfangsseitig zueinander beabstandeten Flanschlöchern (2b) versehener Flansch (2a) ist.

17. Radlagereinheit nach Anspruch 1, wobei die Druckwinkel der zweiten Reihen (6,13) größer sind als die Druckwinkel der ersten Reihen (4,12).

## Claims

1. Wheel bearing unit (1, 10, 16, 22) embodied as an angular contact ball bearing
- with at least two first rows (4, 12) of balls (5, 19),
- with two second rows (6, 13) of balls (5, 20), which rows are arranged parallel to the first rows (4, 12),
- with an outer ring (2, 17, 18) extending around all the balls (5, 19, 20) together radially on the outside,
- with one inner ring or two inner rings (3, 11),
a first pairing being arranged on one side of an imaginary radial plane (E), which is perpendicular to the central axis (10a, 16a, 22a), of the angular contact ball bearing, and a second pairing being arranged on a second side of the radial plane (E), and the two pairings being formed from one of the first rows (4, 12) and from one of the second rows (6, 13) and being preloaded against one another by virtue of an outwardly formed flanged rim (7a) which is pressed against the one inner ring or against one of the inner rings (3, 11) bracing said inner ring (3, 11), and in this connection the outer ring (2, 17, 18) having axially on each side of a radially inwardly projecting central rim (27) a first inner raceway (28) for one of the first rows and a second inner raceway (29), adjacent to the first inner raceway, for one of the second rows (6, 13), the wheel bearing unit (1, 10, 16, 22) having pressure angles enclosed between the contact line of the angular contact ball bearing embodiment and the radial plane (E), the pressure angles differing from one another in their absolute angular degree value between the rows (12, 13) in a pairing.

2. Wheel bearing unit according to Claim 1, in which a greatest diameter of an imaginary first reference circle passing through the centers of the balls (5, 19) of the first rows (4, 12) and running around the central axis (1a, 10a, 16a, 22a) is smaller than a greatest diameter of an imaginary second reference circle passing through the centers of the balls (5, 20) of the second rows (6, 13) and running around the central axis (1a, 10a, 16a, 22a).

3. Wheel bearing unit according to Claim 1, in which the balls (19) of the first row (12) have a smaller ball diameter than the balls (20) of the second row (13).

4. Wheel bearing unit according to Claim 1, in which the second inner raceway (29) adjoins, on the side facing away from the first inner raceway (28) axially, a diameter constriction (30), the second inner raceway (29) merging with the diameter constriction (30) and in this connection the greatest free inside diameter of the second inner raceway (29) being greater than the smallest free inside diameter on the diameter constriction (30).

5. Wheel bearing unit according to Claim 1, the inner ring (3, 11) having at least one first outer raceway (31) and one second outer raceway (32) for one of the pairings.

6. Wheel bearing unit according to Claim 5, with at least two of the inner rings (3, 11).

7. Wheel bearing unit according to Claim 5, with a radially outwardly projecting outer rim (33) on the inner ring (3, 11), the outer rim (33) adjoining the second outer raceway (32) in the direction away from the first outer raceway (31) and in this connection the outer rim (33) having a maximum outer rim diameter which is greater than all other greatest outside diameters of the inner ring (3, 11) which are adjacent to the outer rim (33) toward the first outer raceway (31).

8. Wheel bearing unit according to Claim 7, with a radial raceway superelevation (34) axially between the first outer raceway (31) and the second outer raceway (32), the second outer raceway (32) merging with the raceway superelevation (34) in the direction of the first outer raceway (31), and the smallest outside diameter of the second outer raceway (32) being smaller than the smallest outside diameter of the raceway superelevation (34).

9. Wheel bearing unit according to Claim 7, in which at least the balls (5, 19, 20), the outer ring (2, 17, 18) and the inner ring (3, 11) are combined in a subassembly which holds together in itself, at least one of the inner rings (3, 11) being arranged concentrically on a flange body (7) and in this connection the inner ring (3, 11) bearing axially against the flange body (7) and being held axially means of a radially outwardly facing flanged rim (7a) pressed axially against the inner ring (3, 11) at the end.

10. Wheel bearing unit according to Claim 9, in which two inner rings (3, 11) touching one another at the end are arranged on the flange body (7) and are prestressed against one another axially by means of the flanged rim (7a) and in this connection one of the inner rings (3, 11) is pressed axially against the flange body (7).

11. Wheel bearing unit according to Claim 1, the wheel bearing unit (1, 10, 16, 22) having pressure angles enclosed between the contact line of the angular contact ball bearing embodiment and an imaginary plane at right angles to the central axis (10a, 16a, 22a), the pressure angles being the same as one another in their absolute angular degree value from row (4) to row (6) in in each case one of the pairings.

12. Wheel bearing unit according to Claim 1, with contact lines of which the axial spacing from pairing to pairing increases toward the central axis (10a, 16a, 22a).

13. Wheel bearing unit according to Claim 1, which has at least one fastening element (8) for the surrounding environment of the wheel bearing unit (1, 10, 16, 22).

14. Wheel bearing unit according to Claim 13, in which the fastening element (8) is a radially extending flange (2a, 37).

15. Wheel bearing unit according to Claim 13, in which one of the fastening elements (8) is at least one projection designed in one piece with the outer ring (2, 18) and in this connection the projection protrudes radially outward from the outer ring (2, 18).

16. Wheel bearing unit according to Claim 15, in which the fastening element (8) is a flange (2a) running around the central axis (1a, 16a, 22a) and provided with a number of flange holes (2b) which are spaced in relation to one another at the periphery.

17. Wheel bearing unit according to Claim 1, the pressure angles of the second rows (6, 13) being greater than the pressure angles of the first rows (4, 12).

## Revendications

1. Unité de palier de roue (1, 10, 16, 22) en version à roulement à billes à contact oblique, comprenant
- au moins deux premières rangées (4, 12) de billes (5, 19),
- deux deuxièmes rangées (6, 13) de billes (5, 20) disposées parallèlement aux premières rangées (4, 12),
- une bague extérieure (2, 17, 18) venant en prise radialement à l'extérieur en commun autour de toutes les billes (5, 19, 20),
- une bague intérieure ou deux bagues intérieures (3, 11) ,
dans laquelle, d'un côté d'un plan radial (E) imaginaire, perpendiculaire à l'axe médian (10a, 16a, 22a), du roulement à billes à contact oblique, est disposée une première paire, et sur un deuxième côté du plan radial (E) est disposée une deuxième paire, les deux paires étant formées de l'une des premières rangées (4, 12) et de l'une des deuxièmes rangées (6, 13) et étant inclinées l'une par rapport à l'autre, par le fait qu'un bord de bordure (7a) façonné vers l'extérieur, et pressé contre la bague intérieure ou contre l'une des bagues intérieures (3, 11), serre cette bague intérieure (3, 11) et la bague extérieure (2, 17, 18), en l'occurrence, présente, axialement de chaque côté d'un bord central (27) situé radialement vers l'intérieur, à chaque fois un premier chemin de roulement intérieur (28) pour l'une des premières rangées et un deuxième chemin de roulement intérieur (29) se raccordant au premier chemin de roulement intérieur pour l'une des deuxièmes rangées (6, 13), l'unité de palier de roue (1, 10, 16, 22) présentant des angles de pression inclus entre la ligne de contact de la version à roulement à billes à contact oblique et le plan radial (E), les angles de pression se distinguant l'un de l'autre par leur valeur absolue en degrés angulaires entre les rangées (12, 13) dans une paire.

2. Unité de palier de roue selon la revendication 1, dans laquelle un plus grand diamètre d'un premier cercle central imaginaire passant par les centres des billes (5, 19) des premières rangées (4, 12) et tournant autour de l'axe médian (1a, 10a, 16a, 22a) est plus petit qu'un plus grand diamètre d'un deuxième cercle central imaginaire passant par les centres des billes (5, 20) des deuxièmes rangées (6, 13) et tournant autour de l'axe médian (1a, 10a, 16a, 22a).

3. Unité de palier de roue selon la revendication 1, dans laquelle les billes (19) de la première rangée (12) présentent un plus petit diamètre de bille que les billes (20) de la deuxième rangée (13).

4. Unité de palier de roue selon la revendication 1, dans laquelle au deuxième chemin de roulement intérieur (29) se raccorde axialement à l'opposé du premier chemin de roulement intérieur (28) un rétrécissement de diamètre (30), le deuxième chemin de roulement intérieur (29) se prolongeant par le rétrécissement de diamètre (30) et le plus grand diamètre intérieur libre du deuxième chemin de roulement intérieur (29) étant dans ce cas supérieur au plus petit diamètre intérieur libre au niveau du rétrécissement de diamètre (30).

5. Unité de palier de roue selon la revendication 1, dans laquelle la bague intérieure (3, 11) présente au moins un premier chemin de roulement extérieur (31) et un deuxième chemin de roulement extérieur (32) pour l'une des paires.

6. Unité de palier de roue selon la revendication 5, comprenant au moins deux des bagues intérieures (3, 11).

7. Unité de palier de roue selon la revendication 5, comprenant un bord extérieur (33) disposé radialement vers l'extérieur sur la bague intérieure (3, 11), le bord extérieur (33) se raccordant au deuxième chemin de roulement extérieur (32) à l'écart du premier chemin de roulement extérieur (31), et en l'occurrence le bord extérieur (33) présentant un diamètre de bord extérieur maximum qui est supérieur à tous les autres plus grands diamètres extérieurs de la bague intérieure (3, 11) se raccordant au bord extérieur (33) vers le premier chemin de roulement extérieur (31).

8. Unité de palier de roue selon la revendication 7, comprenant un rehaussement de chemin de roulement radial (34) axialement entre le premier chemin de roulement extérieur (31) et le deuxième chemin de roulement extérieur (32), le deuxième chemin de roulement extérieur (32) se prolongeant dans la direction du premier chemin de roulement extérieur (31) dans le rehaussement de chemin de roulement (34) et le plus petit diamètre extérieur du deuxième chemin de roulement extérieur (32) étant plus petit que le plus petit diamètre extérieur du rehaussement de chemin de roulement (34).

9. Unité de palier de roue selon la revendication 7, dans laquelle au moins les billes (5, 19, 20), la bague extérieure (2, 17, 18) et la bague intérieure (3, 11) sont maintenues pour former une unité constructive auto-cohésive, au moins l'une des bagues intérieures (3, 11) étant disposée de manière concentrique sur un corps de bride (7) et en l'occurrence la bague intérieure (3, 11) s'appliquant axialement contre le corps de bride (7) et étant maintenue axialement au moyen d'un bord de bordure (7a) tourné radialement vers l'extérieur et pressé axialement du côté frontal contre la bague intérieure (3, 11).

10. Unité de palier de roue selon la revendication 9, dans laquelle deux bagues intérieures (3, 11) en contact l'une avec l'autre du côté frontal sont disposées sur le corps de bride (7) et sont précontraintes axialement l'une contre l'autre au moyen du bord de bordure (7a) et en l'occurrence l'une des bagues intérieures (3, 11) est pressée axialement contre le corps de bride (7).

11. Unité de palier de roue selon la revendication 1, dans laquelle l'unité de palier de roue (1, 10, 16, 22) présente des angles de pression inclus entre la ligne de contact de la version à roulement à billes à contact oblique et un plan imaginaire perpendiculaire à l'axe médian (10a, 16a, 22a), les angles de pression de la rangée (4) à la rangée (6) étant identiques l'un à l'autre en valeur absolue en degrés angulaires dans chacune des paires.

12. Unité de palier de roue selon la revendication 1, comprenant des lignes de contact, dont la distance axiale d'une paire à l'autre augmente vers l'axe médian (10a, 16a, 22a).

13. Unité de palier de roue selon la revendication 1, qui présente au moins un élément de fixation (8) pour entourer l'unité de palier de roue (1, 10, 16, 22).

14. Unité de palier de roue selon la revendication 13, dans laquelle l'élément de fixation (8) est une bride saillant radialement (2a, 37).

15. Unité de palier de roue selon la revendication 13, dans laquelle l'un des éléments de fixation (8) est au moins un épaulement réalisé d'une seule pièce avec la bague extérieure (2, 18), et l'épaulement fait saillie en l'occurrence radialement vers l'extérieur hors de la bague extérieure (2, 18).

16. Unité de palier de roue selon la revendication 15, dans laquelle l'élément de fixation (8) est une bride (2a) entourant l'axe médian (1a, 16a, 22a), pourvue de plusieurs trous de bride (2b) espacés les uns des autres sur la périphérie.

17. Unité de palier de roue selon la revendication 1, dans laquelle les angles de pression des deuxièmes rangées (6, 13) sont supérieurs aux angles de pression des premières rangées (4, 12).
